# FASCICULE DE BREVET EUROPEEN

(11) **EP 2 858 885 B1**
(45) Date de publication et mention de la délivrance du brevet: **29.06.2016**
(21) Numéro de dépôt: 13712878.1
(22) Date de dépôt: 01.03.2013
(51) Int. Cl.: B62D 65/14, B62D 65/18

(54) **DISPOSITIF DE MISE EN PLACE D'UN SIEGE OU D'UN ENSEMBLE DE SIEGES DE MEME RANG DANS UN VEHICULE, ET PROCEDE ASSOCIE**
VORRICHTUNG ZUR INSTALLATION EINES SITZES ODER MEHRERER SITZE IN EINER REIHE IN EINEM FAHRZEUG UND ZUGEHÖRIGES VERFAHREN
DEVICE FOR INSTALLING A SEAT OR SET OF SEATS IN THE SAME ROW IN A VEHICLE, AND ASSOCIATED METHOD

(30) Priorité: 09.03.2012 FR 1252156
(43) Date de publication de la demande: 15.04.2015
(73) Titulaire: Peugeot Citroën Automobiles SA, 78140 Vélizy Villacoublay (FR)
(72) Inventeur: MAZO, Stéphane, F-78160 Marly Le Roi (FR); CERON, Patrick, F-94100 Saint Maur Des Fosses (FR); NOISETTE, Vincent, F-78350 Jouy en Josas (FR); VAUDECRANNE, Jean-François, F-78120 Rambouillet (FR)
(86) Numéro de dépôt international: PCT/FR2013/050441
(87) Numéro de publication internationale: WO 2013/132178

(56) Documents cités:
- EP-A2- 0 356 004
- DE-A1- 10 114 393
- FR-A1- 2 912 074

## Description

La présente invention revendique la priorité de la demande française 1252156 déposée le 9 mars 2012.

L'invention concerne principalement un dispositif pour manipuler et mettre en place un siège ou un ensemble de sièges de même rang dans un véhicule, notamment automobile, sur une ligne de montage.

L'invention porte également sur un procédé de manipulation et de mise en place d'un siège ou d'un ensemble de sièges de même rang dans un véhicule utilisant un tel dispositif.

La mise en place des sièges de rang arrière de véhicule automobile sur une ligne de montage nécessitent d'une part l'introduction de ces sièges dans le véhicule par une entrée de porte latérale en regard de laquelle les sièges doivent être positionnés, et d'autre part la fixation de ces sièges à la caisse du véhicule dans leur position d'utilisation.

La plupart des rangs arrière se composent d'un siège dit 2/3 et d'un siège adjacent dit 1/3 dont les largeurs respectives représentent sensiblement 2/3 et 1/3 de la largeur totale d'assise du rang.

La mise en place d'un rang arrière comportant un siège 2/3 et un siège 1/3 sur une ligne de montage nécessite alors la mise en place et la fixation à la caisse du véhicule du siège 2/3 et du siège 1/3 qui sont indépendants dans leur structure, ainsi que dans leurs éléments de positionnement et de fixation dans le véhicule automobile.

Des moyens techniques d'assistance et de montage de sièges 2/3 et 1/3 de rang arrière de véhicule existent déjà.

A cet effet, la publication FR 2912074 décrit un dispositif permettant de manipuler et de mettre en place un ensemble de sièges de rang arrière. Ce dispositif comporte des préhenseurs pour prendre individuellement les sièges 2/3 et 1/3, un bras support sur lequel sont montés les préhenseurs, des moyens pour lever ou descendre individuellement les sièges suspendus et des moyens de basculement de ces sièges.

Le procédé de mise en place des siège consiste à accrocher les préhenseurs sur les sièges, introduire les sièges dans le véhicule par une entrée de porte latérale, incliner le premier siège et le poser pour sa mise en place définitive, puis effectuer les mêmes opérations pour le second siège avant de retirer le dispositif.

Mais la structure et le volume du dispositif de cette publication ne permet pas l'introduction de sièges par une entrée de porte latérale à dimensions réduites.

Il existe également des dispositifs mettant en oeuvre un chariot de prise de sièges et d'insertion de ces sièges dans le véhicule par une entrée de porte latérale, mais ces dispositifs ne sont également pas applicables pour des entrées de porte à dimension réduite. Le document EP-A-0 356 004 décrit un dispositif de manipulation et de mise en place d'un siège dans un véhicule sur une ligne de montage, et un procédé, qui comprend un bras apte à âtre guidé en translation et en rotation, et solidaire d'une plaque de support de la face arrière de l'assise d'un siège repliée verticalement contre le dossier de siège correspondant, laquelle plaque de support comporte des moyens de verrouillage dudit dispositif à une barre de prise de siège située au niveau de la face arrière de ladite assise de siège.

Dans ce contexte, la présente invention vise un dispositif et un procédé de manipulation et de mise en place d'un siège ou d'un ensemble de sièges de même rang assurant l'introduction de ces sièges par une entrée de porte latérale à dimension réduite, permettant la mise en place aisée de ces sièges dans le véhicule notamment en ce que les opérateurs n'aient pas à porter les sièges pendant les opérations de mise en place et de fixation du ou des sièges.

A cet effet, le dispositif de manipulation et de mise en place d'un siège ou d'un ensemble de sièges de même rang dans un véhicule sur une ligne de montage est essentiellement caractérisé en ce qu'il comporte un bras apte à être guidé en translation et en rotation, et solidaire d'au moins une plaque de support de la face arrière de l'assise d'un siège repliée verticalement contre le dossier de siège correspondant, laquelle plaque de support comporte des moyens de verrouillage du dit dispositif à au moins une barre de prise de siège située au niveau de la face arrière de la dite assise de siège.

Le dispositif de l'invention peut également comporter les caractéristiques optionnelles suivantes considérées isolément ou selon toutes les combinaisons techniques possibles :
- le dispositif comporte une première plaque de support d'un siège 1/3 et une seconde plaque de support du siège 2/3 du même rang de sièges, et les moyens de verrouillage respectifs de la première et de la seconde de support sont indépendants.
- chaque plaque de support s'étend sur toute la largeur de la face arrière de l'assise de siège considérée depuis la partie supérieure de la face arrière de l'assise de siège repliée vers l'arrière contre le dossier de siège et au niveau de laquelle se trouve la barre de prise de siège, jusqu'à la partie inférieure de la face arrière de l'assise de siège contre laquelle la plaque de support est en appui.
- les moyens de verrouillage comportent un élément d'emprise de la barre de prise de siège située en partie supérieure de la face inférieure de l'assise de siège repliée en portefeuille contre le dossier de siège correspondant, et des moyens de blocage de la dite barre de prise de siège dans cette position relativement au dispositif.
- l'élément d'emprise est une tôle en équerre s'étendant depuis la face arrière de la plaque de support et venant se crocheter sur la barre de prise de siège, et les moyens de blocage comportent une barre de verrouillage actionnable en rotation depuis une position de libération de la barre de prise de siège crochetée jusqu'à une position de blocage de la dite barre de prise de siège relativement au dispositif.
- le dispositif comporte une barre d'entraînement en pivotement de la barre de verrouillage vers sa position de blocage, apte à maintenir la barre de verrouillage en position de blocage par une sauterelle de verrouillage entraînant en butée une plaque de maintien qui s'oppose au pivotement inverse de la dite barre de verrouillage

L'invention porte également sur un procédé de manipulation et de mise en place d'un siège ou d'un ensemble de sièges de même rang dans un véhicule sur une ligne de montage qui est essentiellement caractérisé en ce qu'il comporte au moins les étapes de :
∘ verrouillage du dispositif précédemment décrit sur la barre de prise de siège d'un siège ou d'un ensemble de sièges de même rang repliés verticalement en position dite de portefeuille,
∘ introduction dans le véhicule, par une entrée de porte latérale, du siège ou de l'ensemble de sièges repliés verticalement en position de portefeuille,
∘ pivotement vers l'avant et abaissement du dispositif de façon à approcher le siège ou l'ensemble de sièges de sa position d'utilisation,
∘ déverrouillage du dispositif d'un siège,
∘ positionnement du siège dans sa position d'utilisation,
∘ fixation du siège positionné à la structure du véhicule,
∘ retrait du dispositif du véhicule par l'entrée de porte latérale.

Le procédé de l'invention pour lequel l'ensemble de sièges est constitué d'un siège 2/3 et d'un siège 1/3 peut également comporter les caractéristiques optionnelles suivantes considérées isolément ou selon toutes les combinaisons techniques possibles :
∘ verrouillage du dispositif de l'invention sur la barre de prise de siège respective du siège 2/3 et du siège 1/3,
∘ introduction dans le véhicule, par une entrée de porte latérale, des sièges 2/3 et 1/3 repliés verticalement en position de portefeuille,
∘ pivotement vers l'avant et abaissement du dispositif de façon à approcher les sièges 2/3 et 1/3 de leur position respective d'utilisation,
∘ déverrouillage du dispositif du siège 2/3
∘ positionnement du siège 2/3 dans sa position d'utilisation,
∘ basculement vers l'arrière et fixation du siège 2/3 à la structure du véhicule,
∘ déverrouillage du dispositif du siège 1/3,
∘ positionnement du siège 1/3 dans sa position d'utilisation,
∘ basculement vers l'arrière et fixation du siège 2/3 à la structure du véhicule,
∘ retrait du dispositif du véhicule par l'entrée de porte latérale.
   - les étapes respectives de positionnement des sièges 2/3 et 1/3 dans leur position respective d'utilisation consistent à introduire un axe monté sur le siège concerné dans un bénitier fermé situé dans le passage de roue de la structure du véhicule.
   - l'étape de retrait du dispositif du véhicule consiste à relever le dispositif, à faire pivoter le dispositif vers l'arrière, puis à retirer latéralement le dispositif du véhicule par l'entrée de porte latérale.

D'autres caractéristiques et avantages de l'invention ressortiront clairement de la description qui en est donnée ci-dessous, à titre indicatif et nullement limitatif, en référence aux figures annexées parmi lesquelles :
- la figure 1 est une représentation schématique en perspective d'un rang arrière de sièges composé d'un siège 2/3 et d'un siège 1/3 avant mise en place dans le véhicule, ce rang de sièges étant illustré replié verticalement en position dite de portefeuille,
- la figure 2 est une représentation schématique en perspective de la face avant du dispositif de l'invention,
- la figure 3 est une représentation schématique en perspective de la face l'arrière du dispositif de l'invention,
- la figure 4 est une représentation schématique en perspective du dispositif de l'invention verrouillé sur le rang de sièges arrière de la figure 1,
- la figure 5 est une représentation schématique en perspective agrandie des moyens de verrouillage du dispositif de l'invention au siège 1/3 du rang de sièges arrière,
- la figure 6 est une représentation schématique en coupe d'une partie des moyens de verrouillage du dispositif de l'invention au siège 1/3 du rang de sièges arrière selon les flèches VI-VI de la figure 5,
- la figure 7 est une représentation schématique en perspective agrandie des moyens de verrouillage du dispositif de l'invention au siège 2/3 du rang de sièges arrière,
- la figure 8 est une représentation schématique en perspective de l'étape d'introduction du rang de sièges arrière verrouillé sur le dispositif de l'invention par une entrée de porte latérale,
- la figure 9 est une représentation schématique en perspective de l'étape de basculement et d'abaissement du rang de sièges arrière introduit dans le véhicule,
- la figure 10 est une représentation schématique en perspective de la fin de l'étape de fixation des sièges de rang arrière dans le véhicule, et
- la figure 11 est une représentation schématique de l'étape de retrait du dispositif de l'invention depuis l'entrée de porte latérale.

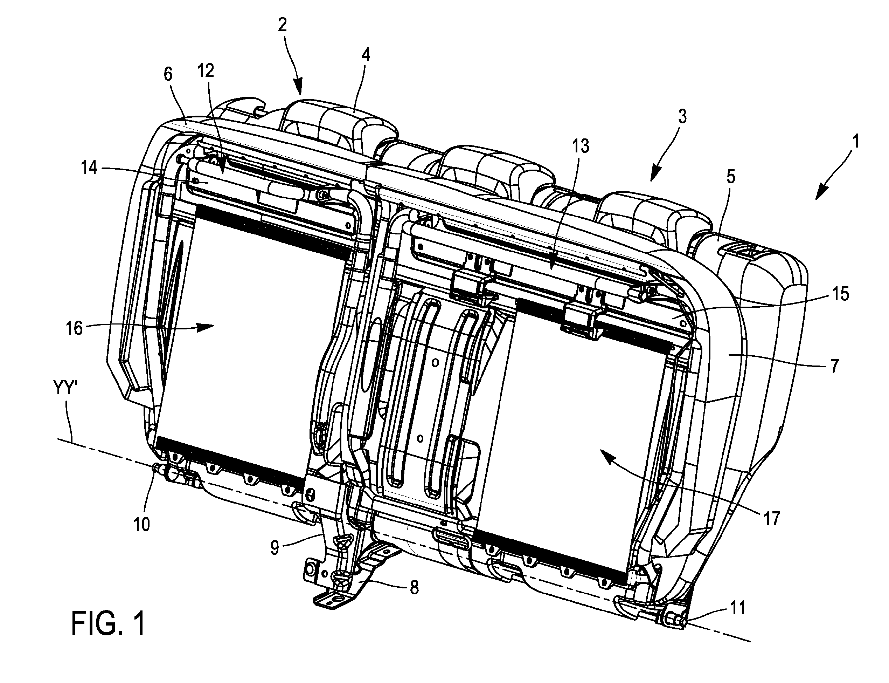

En référence à la figure 1, un rang de siège arrière 1 est composé d'un siège 1/3 référencé 2 et d'un siège 2/3 référencé 3.

Chacun des sièges 1/3 2 et 2/3 3 comporte un dossier de siège 4,5 et une assise de siège 6,7 monté articulée au dossier de siège correspondant 4,5.

Les sièges 1/3 2 et 2/3 sont représentés accolés sur cette figure mais sont indépendants dans leur structure et dans leurs moyens de fixation au véhicule.

A cet effet, le siège 2/3 3 comporte un pied de fixation 8 destiné à être solidarisé à la caisse du véhicule par vissage sur le plancher du véhicule. Le siège 1/3 comporte également un pied de fixation 9 qui est destiné à être solidarisé à la caisse du véhicule par fixation sur le pied de fixation 8 du siège 2/3 3.

Par conséquent, lors du montage, le siège 2/3 3 devra être fixé au plancher du véhicule avant le siège 1/3 2.

La position du rang arrière 1 dans le véhicule est établi au moyen d'axes en saillie vers l'extérieur 10,11 selon l'axe transversal YY' du rang de sièges 1 qui sont respectivement situés dans la partie inférieure des sièges 1/3 2 et 2/3 3.

Le positionnement du rang de sièges 1 dans le véhicule consiste notamment à insérer chacun de ces axes 10,11 dans des logements fermés non représentés situés dans les passages de roues respectifs droite et gauche du véhicule. Ces logements sont également dénommés « bénitiers » et le dispositif de l'invention s'applique plus particulièrement au cas de bénitiers dits fermés nécessitant l'insertion de l'axe correspondant 10,11 selon l'axe YY'.

Par ailleurs, la prise de chacun des sièges 1/3 2 et 2/3 3 est assurée par une barre de prise de siège respective 12,13 s'étendant sur la largeur de la partie supérieure 14,15 de la face arrière 16,17 du siège considéré 2,3. Les parties 14,15 sont dites supérieure relativement au positionnement vertical en portefeuille du rang de sièges 1 tel qu'illustré sur la figure 1.

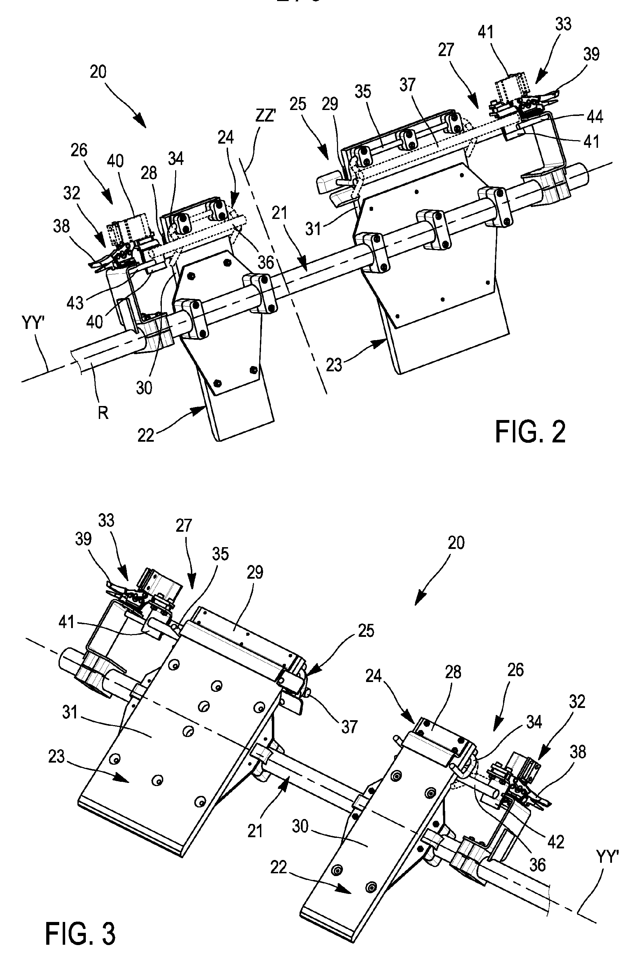

En référence aux figures 2 et 3, le dispositif de l'invention 20 comprend un bras de guidage 21 relié par l'une de ses extrémités à un chariot non représenté apte à assurer la rotation autour de l'axe de rotation R du bras de guidage 21, la translation du bras de guidage 21 selon son axe principale YY' confondu avec l'axe de rotation R, ainsi que la levée et l'abaissement du bras 21 selon l'axe ZZ' perpendiculaire à l'axe principal YY'.

Le bras de guidage 21 est solidarisé à deux plaques de support 22,23 respectivement destinée à être accolées aux faces arrière respectives 16,17 des sièges 1/3 2 et 2/3 3 comme il sera vu plus loin.

Chaque plaque de support 22,23 comporte, au niveau de sa partie supérieure 24,25 des moyens de verrouillage respectifs 26,27 assurant le verrouillage indépendant du dispositif de l'invention 20 à d'une part, le siège 1/3 2 et d'autre part, le siège 2/3 3.

Les moyens de verrouillage 26,27 comportent chacun un élément d'emprise 28,29 de la barre de prise de siège correspondante 12,13, constitué par une tôle en équerre 28,29 s'étendant vers le bas depuis la partie supérieure 24,25 de la face arrière respective 30,31 de la plaque de support considérée 22,23, et dans laquelle chaque barre de prise de siège 12,13 vient se loger, comme il sera décrit plus loin.

Chaque moyen de verrouillage 26,27 comporte également des moyens de blocage 32,33 de la barre de prise de siège logée dans l'élément d'emprise 28,29, comprenant une barre de verrouillage 34,35 montée en pivotement relativement à la plaque de support considérée 22,23, ainsi qu'une barre d'entraînement en rotation 36,37 de la barre de verrouillage 34,35 qui s'étend derrière la dite barre de verrouillage 34,35 et qui est en liaison avec une sauterelle de verrouillage 38,39 dont l'actionnement en mode de verrouillage fait pivoter une plaque de maintien 41,42 qui s'oppose au mouvement libératoire vers l'arrière de la barre de verrouillage 34,35. Chaque moyen de verrouillage 26,27 comporte également une barre de sécurité 43,44 s'étendant à l'arrière de la plaque de maintien 41,42 en position de verrouillage, de façon à éviter le désengagement de cette plaque de maintien 41,42 de sa position verrouillage.

Sur les figures 2 à 7, les éléments mobiles des moyens de blocage 32 de la barre de prise de siège 12 du siège 1/3 2 sont représentés en pointillés dans leur position de libération de la barre de prise de siège 12 et en traits pleins dans leur position de blocage.

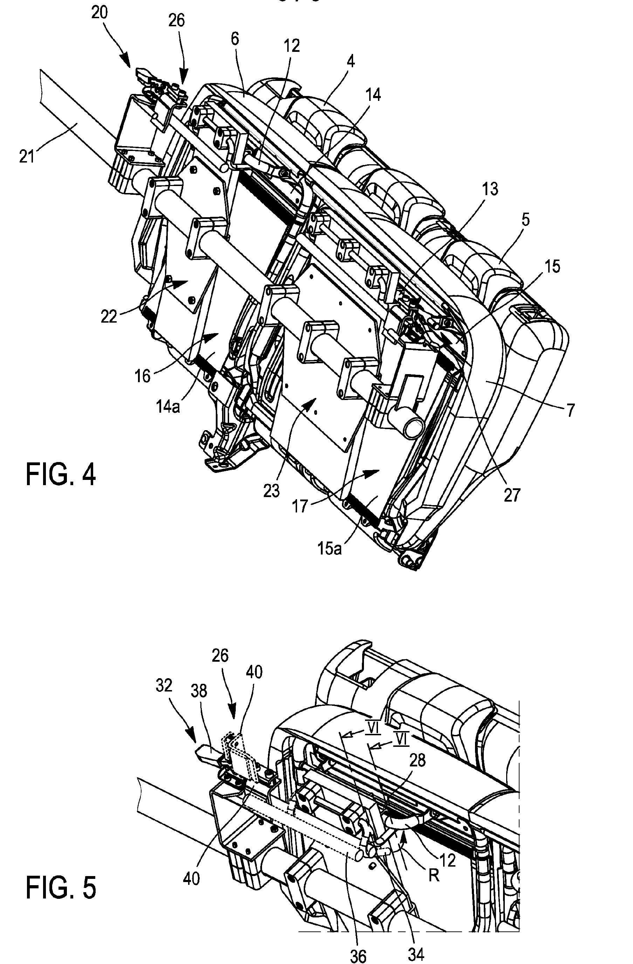

En référence à la figure 5, le verrouillage du dispositif de l'invention 20 sur le siège 1/3 s'effectue d'abord par la mise en position crochetée de l'élément d'emprise 28 sur la barre de prise de siège 12 qui se trouve alors logée entre la tôle en équerre 28 et la face interne 30 de la plaque de support 22, seule la partie inférieure étant ouverte.

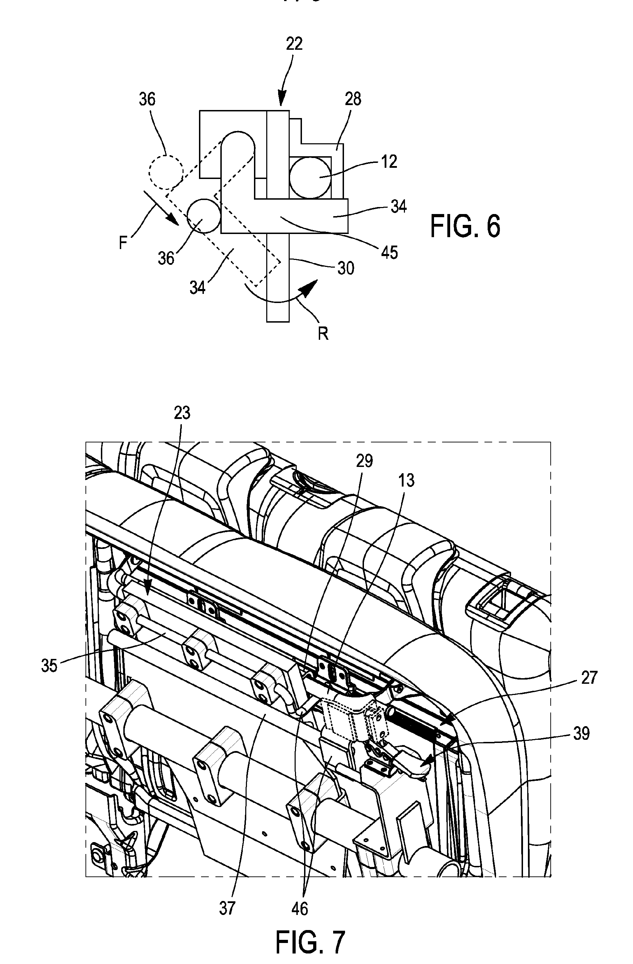

La fermeture de cette partie inférieure, et donc le blocage de la barre de prise de siège 12 dans cette position, s'effectue par un effort de poussée manuelle de la barre d'entraînement en rotation 36 selon la flèche F (figure 6) effectuée par un opérateur ce qui entraîne en pivotement, selon la flèche R, la barre de verrouillage 34 depuis une position de libération de la barre de prise de siège crochetée 12 jusqu'à une position de blocage de cette barre de prise de siège 12 dans laquelle la partie d'extrémité en équerre 45 de la barre de verrouillage 34 vient obturer la partie inférieure ouverte du logement formé par la tôle en équerre 28 et dans lequel se trouve positionnée la barre de prise de siège 12.

Une fois que la barre de verrouillage 34 est dans cette position de blocage, l'opérateur manoeuvre la sauterelle de verrouillage 38 qui entraîne en pivotement de 90° la plaque de maintien 42 (figure 5) depuis une position parallèle à la barre d'entraînement 36 jusqu'à une position de blocage à l'arrière et en appui contre cette barre d'entraînement 36 l'empêchant ainsi de remonter, d'entraîner en pivotement inverse la barre de verrouillage 34 et de libérer la barre de prise de siège 12.

La barre de verrouillage 34 comporte deux parties d'extrémité en équerre 45 aptes à pivoter sous l'effet de la poussée de la barre d'entraînement en rotation 36 et qui sont situées de part et d'autre de la plaque de support 22, permettant ainsi d'obturer la partie inférieure ouverte du logement formé par la tôle en équerre 28 dans lequel se trouve la barre de prise de siège 12 de part et d'autre de cette plaque de support 22.

En référence à la figure 7, les moyens de verrouillage 27 de la barre de prise de siège 13 du siège 2/3 3 fonctionnent de façon identique au moyens de verrouillage 26 de la barre de prise de siège 12 du siège 1/3 2.

Le verrouillage du dispositif de l'invention 20 sur le siège 2/3 s'effectue d'abord par la mise en position crochetée de l'élément d'emprise 29 sur la barre de prise de siège 13 qui se trouve alors logée entre la tôle en équerre 29 et la plaque de support 23, seule la partie inférieure étant ouverte.

La fermeture de cette partie inférieure et donc le blocage de la barre de prise de siège 13 dans cette position s'effectue par un effort de poussée manuelle de la barre d'entraînement en rotation 37 effectué par un opérateur, ce qui entraîne en pivotement la barre de verrouillage 35 depuis une position de libération de la barre de prise de siège crochetée 13 jusqu'à une position de blocage de cette barre de prise de siège 13 dans laquelle la partie d'extrémité en équerre 46 de la barre de verrouillage 35 vient obturer la partie inférieure ouverte du logement formé par la tôle en équerre 29 dans lequel se trouve la barre de prise de siège 13.

Une fois que la barre de verrouillage 35 est dans cette position de blocage, l'opérateur manoeuvre la sauterelle de verrouillage 39 qui entraîne en pivotement de 90° la plaque de maintien 43 depuis une position parallèle à la barre d'entraînement 37 jusqu'à une position de blocage à l'arrière et en appui contre cette barre d'entraînement 37 l'empêchant ainsi de remonter, d'entraîner en pivotement inverse la barre de verrouillage 35 et de libérer la barre de prise de siège 13.

La barre de verrouillage 34 comporte deux parties d'extrémité en équerre 46 aptes à pivoter sous l'effet de la poussée de la barre d'entraînement en rotation 37 et qui sont situées de part et d'autre de la plaque de support 23 permettant d'obturer la partie inférieure ouverte du logement formé par la tôle en équerre 29 dans lequel se trouve la barre de prise de siège 13 de part et d'autre de cette plaque de support 23.

Le verrouillage des deux sièges 1/3 2 et 2/3 3 constitue la première opération de mise en place de ces sièges 1/3 2 et 2/3 3. Pour ce faire, les plaques de support 22,23 du dispositif de l'invention 20 sont disposées contre les faces internes respectives 16,17 des assises de siège 6,7 des sièges 1/3 2 et 2/3 3 et les deux éléments d'emprise 28,29 sont crochetés de façon concomitante aux barres de sièges respectives 12,13 des sièges 1/3 2 et 2/3 3.

Puis, les sauterelles de verrouillage 38,39 sont actionnées de façon concomitante ou simultanée pour verrouiller le dispositif de l'invention 20 aux deux sièges 1/3 2 et 2/3 3.

En référence à la figure 4, les plaques de support 22,23 s'étendent chacune sur toute la largeur de la face arrière 16,17 de l'assise de siège considérée 6,7 depuis la partie supérieure 14,15 de la face arrière 16,17 de l'assise de siège 6,7 au niveau de laquelle se trouve la barre de prise de siège 12,13, jusqu'à la partie inférieure 14a,15a de la face arrière 16,17 de l'assise de siège 6,7 contre laquelle la plaque de support 22,23 est en appui.

Le fait que chaque plaque de support 22,23 est en appui contre la face arrière 16,17, permet de maintenir les sièges 1/3 2 et 2/3 3 fixes relativement au dispositif de l'invention 20 lorsque ces sièges 1/3 2 et 2/3 3 sont verrouillés au dispositif de l'invention 20.

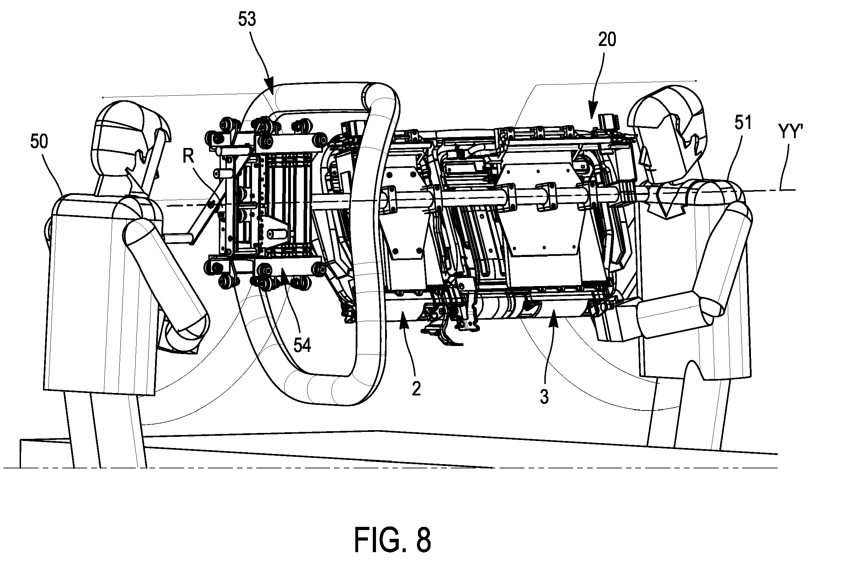

On décrit le procédé de mise en place des sièges 1/3 2 et 2/3 3 dans le véhicule en référence aux figures 8 à 11.

En référence à la figure 8, les sièges 1/3 2 et 2/3 3 verrouillés au dispositif de l'invention 20 en position verticale repliée en portefeuille sont introduits dans le véhicule par l'entrée de la porte latérale droite 53 par un opérateur coté droit 50 et un opérateur côté gauche 51.

Le bras de guidage 21 du dispositif de l'invention est relié par l'une de ses extrémités à un chariot 54 permettant de guider ce bras de guidage 21, et donc le dispositif de l'invention dans son intégralité, en translation selon l'axe YY', en rotation autour de l'axe R de pivotement confondu avec l'axe YY', et verticalement pour le lever et l'abaisser.

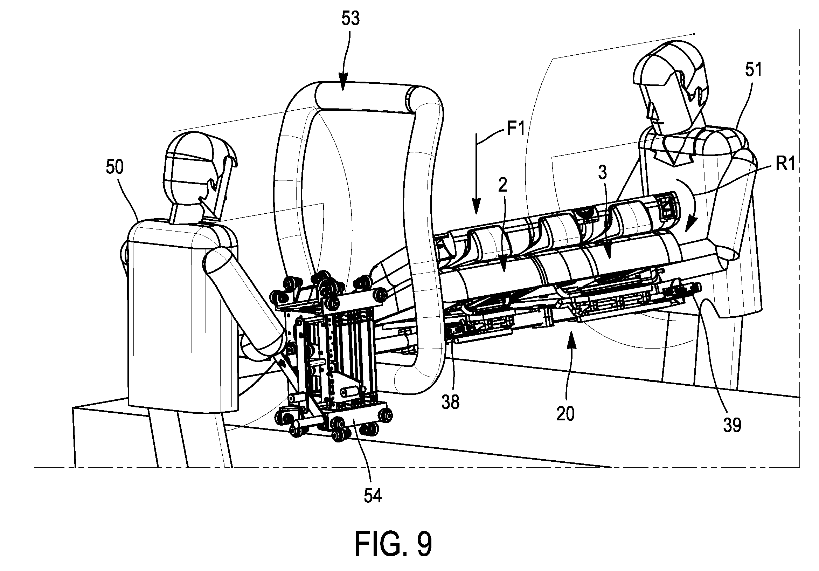

En référence à la figure 9, une fois les sièges 1/3 2 et 2/3 3 introduits dans le véhicule, le chariot 54 abaisse l'ensemble formé par le dispositif de l'invention 20 et les sièges 1/3 2 et 2/3 3 verrouillés selon la flèche F1 et pivote cet ensemble selon la flèche R1 de façon à approcher les sièges 1/3 2 et 2/3 3 de leur position d'utilisation.

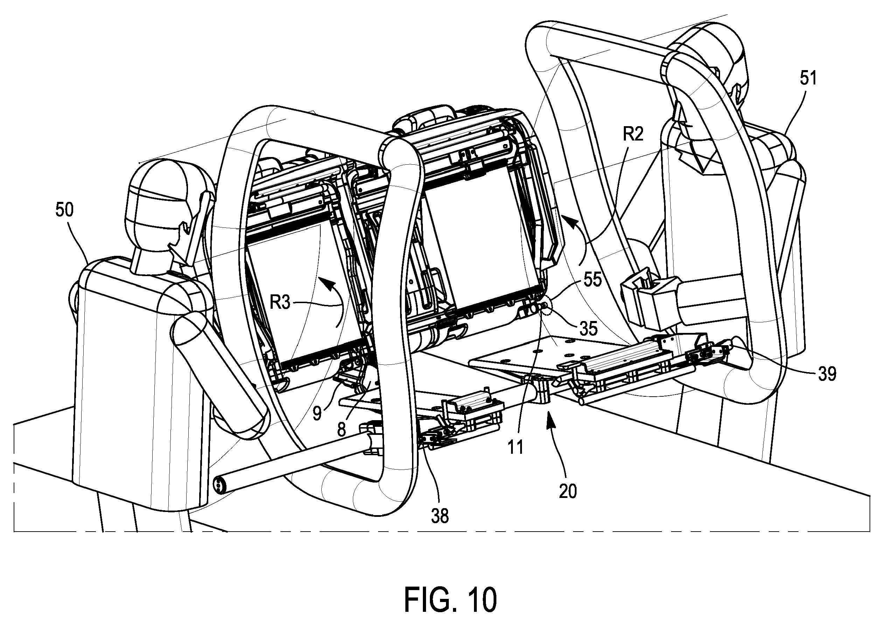

L'opérateur du coté gauche 51 déverrouille ensuite le siège 2/3 3 du dispositif de l'invention 20 par actionnement de la sauterelle de verrouillage 39. Ce même opérateur du coté gauche 51 place alors l'axe 11 du siège 2/3 3 dans le bénitier fermé du véhicule (figure 10) puis pivote vers l'arrière le siège 2/3 3 selon la flèche R2 de la figure 10. L'opérateur du coté droit 50 fixe le siège 2/3 3 au véhicule par verrouillage du pied de fixation 8 du siège 2/3 3 au planche du véhicule non représenté sur ces figures, l'opérateur du coté gauche 51 ayant un accès plus difficile à ce pied de fixation 8.

Les mêmes opérations sont effectuées pour le siège 1/3 2.

L'opérateur du côté droit 50 déverrouille le siège 1/3 2 du dispositif de l'invention 20 par actionnement de la sauterelle de verrouillage 38. Ce même opérateur du coté droit 50 place alors l'axe 10 non visible du siège 1/3 2 dans le bénitier fermé du véhicule également non visible, puis pivote vers l'arrière le siège 1/3 2 selon la flèche R3 de la figure 10. L'opérateur du coté droit 50 fixe le siège 1/3 2 au véhicule par verrouillage du pied de fixation 8 du siège 1/3 2 au pied de fixation 9 du siège 2/3 3 préalablement fixé.

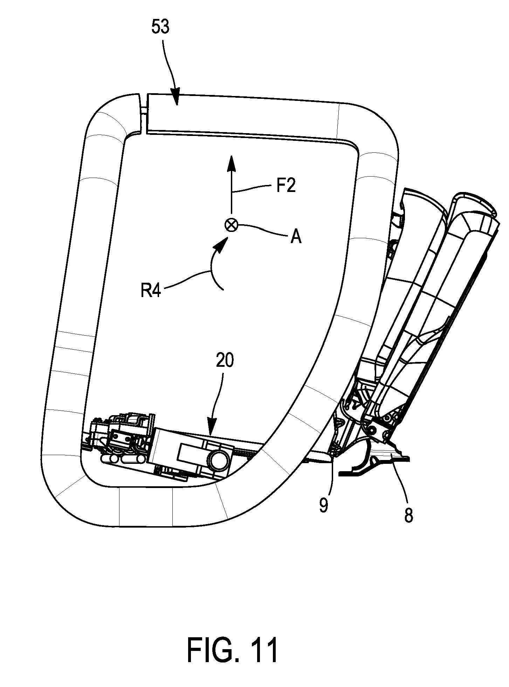

Enfin, en référence à la figure 11, le dispositif de l'invention 20 est retiré du véhicule par des opérations successives de levée selon la flèche F2, pivotement vers l'arrière selon la flèche R4 de la figure 11, et retrait par l'entrée de porte latérale droite selon l'axe A.

Le dispositif de l'invention 20 a été précédemment décrit pour la mise en place de sièges 1/3 2 et 2/3 2 impliquant la mise en place des axes 10,11 dans des bénitiers fermés 55, mais le dispositif de l'invention 20 s'applique également à la mise en place d'un rang formé d'un seul siège et impliquant la mise en place des axes dans des bénitiers ouverts.

Le dispositif de l'invention 20 s'applique plus particulièrement à la mise en place des rangs de sièges arrière 2 ou 3 d'un véhicule automobile.

## Revendications

1. Dispositif de manipulation et de mise en place d'un siège ou d'un ensemble de sièges de même rang dans un véhicule sur une ligne de montage, comportant un bras (21) apte à être guidé en translation et en rotation, et solidaire d'au moins une plaque de support (22,23) de la face arrière (16,17) de l'assise d'un siège (6,7) repliée verticalement contre le dossier de siège correspondant (4,5), laquelle plaque de support (22,23) comporte des moyens de verrouillage (26,27) du dit dispositif (20) à au moins une barre de prise de siège (12,13) située au niveau de la face arrière (16,17) de la dite assise de siège (6,7), **caractérisé en ce qu'**il comporte une première plaque de support (22) d'un siège 1/3 (2) et une seconde plaque de support (23) du siège 2/3 (3) du même rang de sièges (1), et **en ce que** les moyens de verrouillage (26,27) respectifs de la première (22) et de la seconde (23) plaques de support sont indépendants.

2. Dispositif selon la revendication 1, **caractérisé en ce que** chaque plaque de support (22,23) s'étend sur toute la largeur de la face arrière (16,17) de l'assise de siège considérée (6,7) depuis la partie supérieure (14,15) de la face arrière (16,17) de l'assise de siège (6,7) repliée vers l'arrière contre le dossier de siège (4,5) et au niveau de laquelle se trouve la barre de prise de siège (12,13), jusqu'à la partie inférieure (14a,15a) de la face arrière (16,17) de l'assise de siège (6,7) contre laquelle la plaque de support (22,23) est en appui.

3. Dispositif selon l'une quelconque des revendications précédentes, **caractérisé en ce que** les moyens de verrouillage (26,27) comportent un élément d'emprise (28,29) de la barre de prise de siège (12,13) située en partie supérieure (14,15) de la face inférieure (16,17) de l'assise de siège (6,7) repliée en portefeuille contre le dossier de siège correspondant (4,5), et des moyens de blocage (32,33) de la dite barre de prise de siège (12,13) dans cette position relativement au dispositif (20).

4. Dispositif selon la revendication 3, **caractérisé en ce que** l'élément d'emprise (28,29) est une tôle en équerre (28,29) s'étendant depuis la face arrière (30,31) de la plaque de support (22,23) et venant se crocheter sur la barre de prise de siège (12,13), et **en ce que** les moyens de blocage (32,33) comportent une barre de verrouillage (34,35) actionnable en rotation depuis une position de libération de la barre de prise de siège crochetée (12,13) jusqu'à une position de blocage de la dite barre de prise de siège (12,13) relativement au dispositif (20).

5. Dispositif selon la revendication 4, **caractérisé en ce qu'**il comporte une barre d'entraînement en pivotement (36,37) de la barre de verrouillage (34,35) vers sa position de blocage, apte à maintenir la barre de verrouillage (34,35) en position de blocage par une sauterelle de verrouillage (38,39) entraînant en butée une plaque de maintien (41,42) qui s'oppose au pivotement inverse de la dite barre de verrouillage (34,35).

6. Procédé de manipulation et de mise en place d'un siège ou d'un ensemble de sièges de même rang dans un véhicule sur une ligne de montage, lequel ensemble de sièges est constitué d'un siège 2/3 et d'un siège 1/3, **caractérisé en ce qu'**il comporte au moins les étapes de :
• verrouillage du dispositif selon l'une quelconque des revendications 1 à 5 sur la barre de prise de siège respective (12,13) du siège 2/3 (3) et du siège 1/3 (2),
• introduction dans le véhicule, par une entrée de porte latérale (53), des sièges 2/3 (3) et 1/3 (2) repliés verticalement en position de portefeuille,
• pivotement vers l'avant et abaissement du dispositif (20) de façon à approcher les sièges 2/3 (3) et 1/3 (2) de leur position respective d'utilisation,
• déverrouillage du dispositif du siège 2/3
• positionnement du siège 2/3 (3) dans sa position d'utilisation,
• basculement vers l'arrière et fixation du siège 2/3 (3) à la structure du véhicule,
• déverrouillage du dispositif (20) du siège 1/3 (2),
• positionnement du siège 1/3 (2) dans sa position d'utilisation,
• basculement vers l'arrière et fixation du siège 2/3 (3) à la structure du véhicule,
• retrait du dispositif du véhicule par l'entrée de porte latérale (53).

7. Procédé selon la revendication 6, **caractérisé en ce que** les étapes respectives de positionnement des sièges 2/3 (3) et 1/3 (2) dans leur position respective d'utilisation consistent à introduire un axe (10,11) monté sur le siège concerné dans un bénitier fermé (55) situé dans le passage de roue de la structure du véhicule.

8. Procédé selon l'une quelconque des revendications 6 à 7, **caractérisé en ce que** l'étape de retrait du dispositif (20) du véhicule consiste à relever le dispositif (20), à faire pivoter le dispositif (20) vers l'arrière, puis à retirer latéralement le dispositif (20) du véhicule par l'entrée de porte latérale (53).

## Patentansprüche

1. Vorrichtung zur Handhabung und zum Anbringen eines Sitzes oder einer Sitzeinheit ein und derselben Reihe in einem Fahrzeug auf einer Montagelinie, die einen Arm (21) umfasst, der geeignet ist, um in Verschiebung und in Drehung geführt zu werden, und der fest mit mindestens einer Tragplatte (22, 23) der Rückseite (16, 17) der Sitzfläche eines Sitzes (6, 7) verbunden ist, die vertikal gegen die entsprechende Sitzrückenlehne (4, 5) zurückgeklappt ist, wobei die Tragplatte (22, 23) Mittel zum Verriegeln (26, 27) der Vorrichtung (20) an mindestens einer Sitzaufnahmestange (12, 13) umfasst, die im Bereich der Rückseite (16, 17) der Sitzsitzfläche (6, 7) liegt, **dadurch gekennzeichnet, dass** sie eine erste Tragplatte (22) eines 1/3-Sitzes (2) und eine zweite Tragplatte (23) des 2/3-Sitzes (3) derselben Reihe von Sitzen (1) umfasst, und dass die jeweiligen Verriegelungsmittel (26, 27) der ersten (22) und der zweiten (23) Tragplatte unabhängig sind.

2. Vorrichtung nach Anspruch 1, **dadurch gekennzeichnet, dass** sich jede Sitzplatte (22, 23) auf der gesamten Länge der Rückseite (16, 17) der betreffenden Sitzsitzfläche (6, 7) von dem oberen Teil (14, 15) der Rückseite (16, 17) der Sitzsitzfläche (6, 7), die gegen die Sitzrückenlehne (4, 5) zurückgeklappt ist, und auf deren Niveau sich die Sitzaufnahmestange (12, 13) befindet, bis zu dem unteren Teil (14a, 15a) der Rückseite (16, 17) der Sitzsitzfläche (6, 7), gegen welche die Tragplatte (22, 43) in Auflage ist, erstreckt.

3. Vorrichtung nach einem der vorhergehenden Ansprüche, **dadurch gekennzeichnet, dass** die Verriegelungsmittel (26, 27) ein Umfangselement (28, 29) der Sitzaufnahmestange (12, 13) umfassen, das im oberen Teil (14, 15) der Unterseite (16, 17) der Sitzsitzfläche (6, 7), die in Portefeuilleart gegen die entsprechende Sitzrückenlehne (4, 5) zurückgeklappt ist, liegt, und Blockierungsmittel (32, 33) der Sitzaufnahmestange (12, 13) in dieser Position in Bezug zu der Vorrichtung (20).

4. Vorrichtung nach Anspruch 3, **dadurch gekennzeichnet, dass** das Umfangselement (28, 29) ein Winkelblech (28, 29) ist, das sich von der Rückseite (30, 31) der Tragplatte (22, 23) erstreckt und sich auf der Sitzaufnahmestange (12, 13) einhakt, und dass die Blockierungsmittel (32, 33) eine Verriegelungsstange (34, 35) umfassen, die in Drehung ausgehend von einer Freigabeposition der eingehakten Sitzaufnahmestange (12, 13) bis zu einer Blockierungsposition der Sitzaufnahmestange (12, 13) in Bezug zu der Vorrichtung (20) betätigbar ist.

5. Vorrichtung nach Anspruch 4, **dadurch gekennzeichnet, dass** sie eine Antriebsstange (36, 37) zum Schwenken der Verriegelungsstange (34, 35) zu ihrer Blockierungsposition umfasst, die geeignet ist, die Verriegelungsstange (34, 35) durch eine Verriegelungsschmiege (38, 39) in Blockierungsposition zu halten, die eine Halteplatte (41, 42) zum Anschlag antreibt, die sich dem umgekehrten Schwenken der Verriegelungsstange (34, 35) widersetzt.

6. Verfahren zum Handhaben und zum Einrichten eines Sitzes oder einer Sitzeinheit ein und derselben Reihe in einem Fahrzeug auf einer Montagelinie, wobei die Einheit von Sitzen aus einem 2/3-Sitz und einem 1/3-Sitz besteht, **dadurch gekennzeichnet, dass** es mindestens die folgenden Schritte umfasst:
• Verriegeln der Vorrichtung nach einem der Ansprüche 1 bis 5 auf der jeweiligen Sitzaufnahmestange (12, 13) des 2/3-Sitzes (3) und des 1/3-Sitzes (2),
• Einführen in das Fahrzeug durch einen Seitentüreingang (53) des 2/3-Sitzes (3) und des 1/3-Sitzes (2), die vertikal in Portefeuilleposition zurückgeklappt sind,
• Schwenken nach vorn und Senken der Vorrichtung (20) derart, dass der 2/3-Sitz (3) und der 1/3-Sitz (2) ihrer jeweiligen Verwendungsposition angenähert werden,
• Entriegeln der Vorrichtung des 2-/3-Sitzes,
• Positionieren des 2/3-Sitzes (3) in seiner Gebrauchsposition,
• Kippen nach hinten und Befestigen des 2/3-Sitzes (3) an der Struktur des Fahrzeugs,
• Entriegeln der Vorrichtung (20) des 1/3-Sitzes (2),
• Positionieren des 1/3-Sitzes (2) in seiner Gebrauchsposition,
• Kippen nach hinten und Befestigen des 2/3-Sitzes (3) an der Struktur des Fahrzeugs,
• Herausziehen der Vorrichtung von dem Fahrzeug durch die Seiteneingangstür (53).

7. Verfahren nach Anspruch 6, **dadurch gekennzeichnet, dass** die jeweiligen Positionierungsschritte des 2/3-Sitzes (3) und des 1/3-Sitzes (2) in ihrer jeweiligen Gebrauchsposition darin bestehen, eine Achse (10, 11), die auf den betreffenden Sitz in einer geschlossenen Schale (55), die in dem Radlauf der Struktur des Fahrzeugs liegt, montiert ist, einzuführen.

8. Verfahren nach einem der Ansprüche 6 bis 7, **dadurch gekennzeichnet, dass** der Schritt des Herausziehens der Vorrichtung (20) aus dem Fahrzeug darin besteht, die Vorrichtung (20) anzuheben, die Vorrichtung (20) rückwärts zu schwenken, dann die Vorrichtung (20) seitlich aus dem Fahrzeug durch den Seitentüreingang (53) herauszuziehen.

## Claims

1. A device for handling and installing a seat or set of seats in the same row in a vehicle on an assembly line, comprising an arm (21) capable of being translationally and rotationally guided, and rigidly connected with at least one mounting plate (22, 23) of the rear surface (16, 17) of the base of a seat (6, 7), being vertically folded against the corresponding seat back (4, 5), said mounting plate (22, 23) comprising means for locking (26, 27) said device (20) onto at least one seat grip bar (12, 13) located on the rear surface (16, 17) of said seat base (6, 7), **characterized in that** it comprises a first mounting plate (22) of a seat 1/3 (2) and a second mounting plate (23) of the seat 2/3 (3) of the same row of seats (1), and **in that** the respective locking means (26, 27) of the first (22) and second (23) mounting plates are independent.

2. The device according to Claim 1, **characterized in that** each mounting plate (22, 23) extends over the entire width of the rear surface (16, 17) of the seat base (6, 7) concerned from the upper part (14, 15) of the rear surface (16, 17) of the seat base (6, 7) folded toward the rear against the seat back (4, 5) and at the level of which the seat grip bar (12, 13) is situated, up to the lower part (14a, 15a) of the rear surface (16, 17) of the seat base (6, 7) against which the mounting plate (22, 23) rests.

3. The device according to any one of the preceding claims, **characterized in that** the locking means (26, 27) comprise an engagement element (28, 29) of the seat grip bar (12, 13) situated in the upper part (14, 15) of the lower surface (16, 17) of the seat base (6, 7) pocketbook-folded against the corresponding seat back (4, 5), and arresting means (32, 33) of said seat grip bar (12, 13) in this position relative to the device (20).

4. The device according to Claim 3, **characterized in that** the engagement element (28, 29) is an angled sheet (28, 29) extending from the rear surface (30, 31) of the mounting plate (22, 23) and coming to be caught on the seat grip bar (12, 13), and **in that** the arresting means (32, 33) comprise a locking bar (34, 35) actuatable in rotation from a freeing position of the caught seat grip bar (12, 13) up to a position of arresting said seat grip bar (12, 13) relative to the device (20).

5. The device according to Claim 4, **characterized in that** it comprises a pivoting drive bar (36, 37) of the locking bar (34, 35) towards its arresting position, able to hold the locking bar (34, 35) in arresting position by a locking toggle (38, 39) driving in abutment a retaining plate (41, 42) which opposes the reverse pivoting of said locking bar (34, 35).

6. A method for handling and installing a seat or a set of seats in the same row in a vehicle on an assembly line, which set of seats is constituted by a seat 2/3 and a seat 1/3, **characterized in that** it comprises at least the steps of:
• locking the device according to any one of Claims 1 to 5 on the respective seat grip bar (12, 13) of the seat 2/3 (3) and of the seat 1/3 (2),
• introduction in the vehicle, by a side door inlet (53), of the seats 2/3 (3) and 1/3 (2) folded vertically in pocketbook position,
• pivoting toward the front and lowering of the device (20) so as to bring the seats 2/3 (3) and 1/3 (2) toward their respective position of use,
• unlocking of the device of the seat 2/3
• positioning of the seat 2/3 (3) in its position of use,
• tilting toward the rear and fixing of the seat 2/3 (3) to the structure of the vehicle,
• unlocking of the device (20) of the seat 1/3 (2),
• positioning of the seat 1/3 (2) in its position of use,
• tilting toward the rear and fixing of the seat 2/3 (3) to the structure of the vehicle,
• withdrawal of the device from the vehicle through the side door inlet (53).

7. The method according to Claim 6, **characterized in that** the respective steps of positioning of the seats 2/3 (3) and 1/3 (3) in their respective position of use consist in introducing an axis (10, 11) mounted on the seat concerned in a closed clam (55) situated in the wheel arch of the structure of the vehicle.

8. The method according to any one of Claims 6 to 7, **characterized in that** the step of withdrawal of the device (20) of the vehicle consists in raising the device (20), in pivoting the device (20) toward the rear, then laterally withdrawing the device (20) from the vehicle through the side door inlet (53).
